# EUROPEAN PATENT APPLICATION

(11) **EP 1 649 959 A1**
(43) Date of publication of application: **26.04.2006**
(21) Application number: 05256435.8
(22) Date of filing: 17.10.2005
(51) Int. Cl.: B23D 51/10

(54) **Blade clamping apparatus**

(30) Priority: 22.10.2004 GB 0423498
(71) Applicant: GMCA PTY Ltd, Victoria 3045 (AU)
(72) Inventor: Roberts, Nigel, Keith Park Associates (GMC), Pocklington, York YO42 2QN (GB)
(74) Representative: Wood, Graham

(57) **Abstract**

The application relates to a blade holder which allows a saw blade (8), such as a blade for a reciprocating saw in the form of a jigsaw, to be held securely therein for use and to allow the same to be selectively inserted and removed without the need for tools to be used by the user. The insertion of the blade (8) into the holder can be achieved by the user moving the end (6) of the blade (8) into a channel (4) in the blade holder whereupon clamping automatically occurs and the release of the blade (8) requires the manipulation of a release means (20) by the user so that the blade (8) cannot be inadvertently released from the blade holder. The blade holder incorporates a roller (12) which is movable within a chamber (10) within the blade holder between release and clamping positions.

## Description

The invention to which this application relates is a clamping apparatus for use in the clamping in position for use of a blade as part of powered cutting apparatus such as a jigsaw, sabre saw, recip saw or the like.

Cutting blades are provided as seperable elements from the power tool as they need to be replaced from time to time, either to allow a different blade for a different purpose to be used and/or a blunt blade to be replaced. In either case the main aim is to allow the blade to be replaced easily by the user without the need for the user to use a tool in order to either release or secure the blade in position.

Prior art patent US-4601477 in the name of Singer discloses one form of blade holder which does not require the use of a tool to release the blade. In this case the holder includes a roller within a chamber, the chamber positioned adjacent a channel in which the blade is received. The roller is free to move under gravity and/or the influence of a resilient article to move to the bottom end of the chamber. The chamber is shaped with a wall which depends progressively inwardly from one end of the chamber to the other end of the same such that, at the narrow end, the width of the chamber, measured along an axis perpendicular to the axis of rotation of the roller, is proximate to the diameter of the roller. This wall acts to force the roller into contact with the blade and hence traps the blade within the channel. In order to insert or remove the blade from the channel there is provided a release means which can be moved by the user chamber to force the roller in the chamber into the wider part of the same thereby moving the roller away from the blade and allowing the release of the blade. However a problem with this holder is how to move the roller between the clamping and release positions as the example given requires the generation of a mechanism to both insert the blade into the holder and remove the blade from the holder.

In patent EP-0792713 there is disclosed a variation on the apparatus of the above patent in that the release means is provided as a lever operable by the user, and the roller is held in a track, such that movement of the release means causes guided movement of the roller between the blade engaging and disengaging positions. However, a problem with this lever is that the same needs to be in a release position for both the release and insertion of the blade which can be time consuming as the user needs to operate the lever to achieve the locking and unlocking conditions. There is also a need to design the holder carefully to ensure that the roller does not join as it moves along the track and hence represent the cutting apparatus from being used.

The aim of the present invention is to provide an improved blade holder which allows the user operation of the same without the need for a tool. A yet further aim is for the blade to be insertable into the holder without the need for operation of the release means, such that the user need only operate the blade holder release means to release the blade from the holder.

In a first aspect of the invention there is provided a blade holder for a blade on a power tool, said blade selectively insertable into and releasable from the holder, said holder including a channel for location of the blade, a chamber positioned adjacent to the channel, a roller located in the chamber, biasing means to bias the roller towards location with the blade when positioned in the channel to retain the blade in position, and release means to contact the roller to move the same in the chamber when the release means is moved to a release position to allow the blade to be removed from the holder wherein the roller is free to move within the chamber, said roller moved to a blade retaining position by a biasing means when the release means are in a normal position.

In one embodiment the roller is also movable to the release position by the movement of the blade into the channel for insertion with the biasing means subsequently acting to cause the roller to move to contact the blade once inserted into the channel and retain the blade in position. This therefore means that the release means needs only be directly operated by the user when the blade is to be removed from the channel with the release means overcoming the force of the biasing means.

Typically the roller has a notch formed thereon, said notch formed around the periphery of the same and positioned on the roller such that when the roller is in the chamber, and the blade is in the channel, the blade edge is located in the notch.

In one embodiment the release means is movable between release and retaining positions about a pivot axis. Alternatively the release means is linearly movable. In one embodiment a spring is provided to urge the release means to the normal position.

In one embodiment the biasing means is a leaf spring or a torsion spring and has a resistance to movement which can be overcome by the movement force applied by the user either via the release means to allow insertion or release of the blade, or via the blade, to insert the blade into the channel.

Typically the holder is capable of retaining the blade in position, regardless of the particular blade formation as the roller engages with edge or portion of the edge of the blade.

Typically one wall of the chamber is sloped and preferably the wall is that in the chamber which opposes the side of the chamber at which the blade edge is located. In one embodiment the slope encourages the roller to move towards the narrower blade retaining part of the chamber.

The movement of the roller by the release means operation or the insertion of the blade means that the roller is exerting no or a reduced clamping force on the blade so that the blade can be released. This is due to the fact that the width of the chamber at the release position as defined between the sloped wall at that location and the edge of the blade has a width which is greater than the diameter of the roller.

Typically the holder is located with the power tool with any suitable mechanical fixing. Thus the blade holder allows tool free changing of blades to be achieved.

Specific embodiments of the invention are now described with reference to the accompanying drawings, wherein:-
Figures 1a-f illustrate views of the blade holder of the invention with blade in position;
Figures 2a-c illustrate the blade holder of Figures 1a-f in greater detail;
Figures 3a-b illustrate the components of the holder;
Figures 4a-h illustrate a further embodiment of the invention; and
Figures 5a-g illustrate a further embodiment of the invention with part of the outer casing of the blade holder removed for ease of reference.

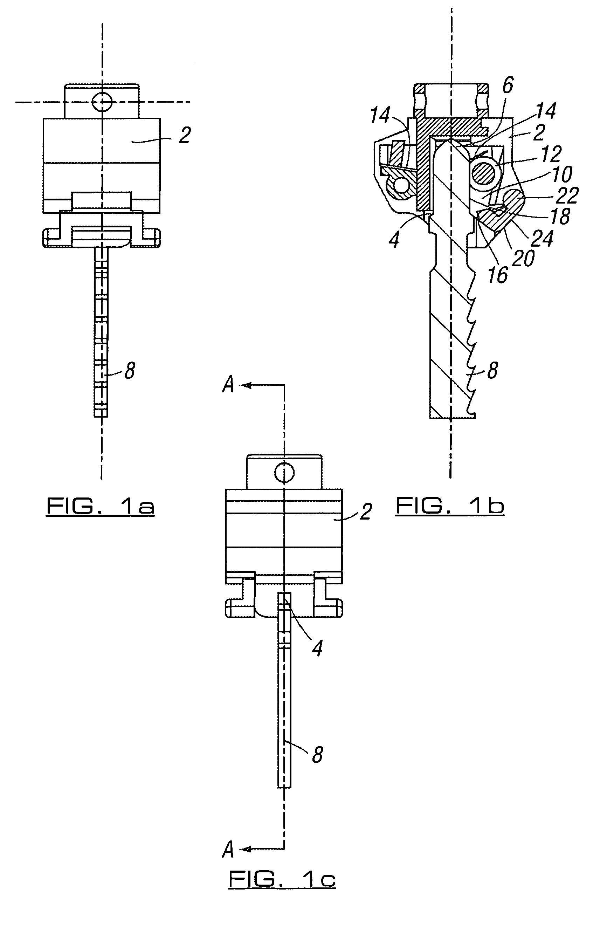

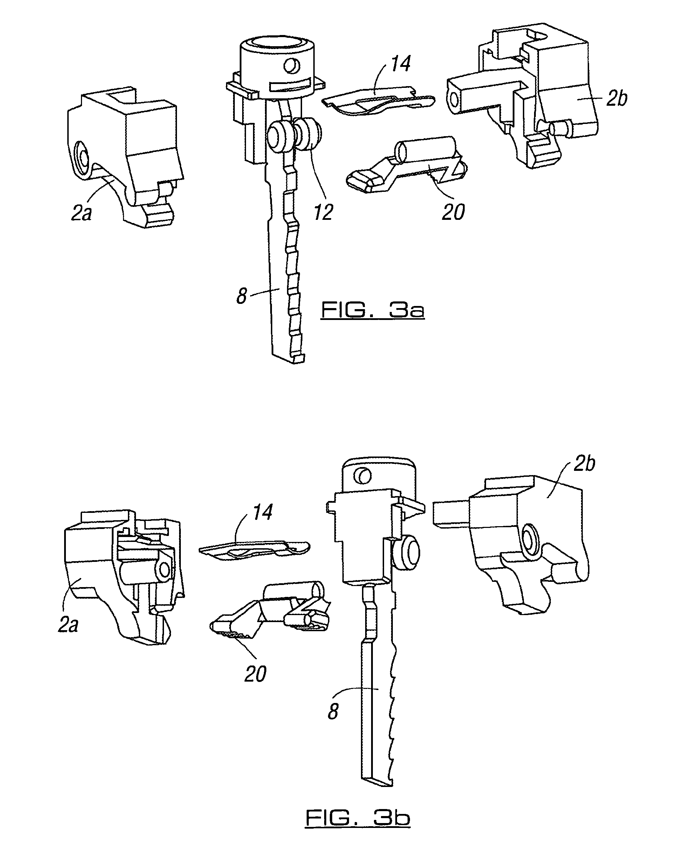

Referring now to the Figures 1a-4h, there is illustrated a first embodiment of a holder for a blade which can be connected to a power tool, typically to a power tool drive shaft in a mechanical fixing of a conventional manner and which is therefore not shown or described in detail here.

The holder includes a body 2 which has a channel 4 for reception of the end 6 of blade 8 which is to be retained therein. Adjacent the channel in connection therewith is a chamber 10 in which a roller 12 is positioned for movement. The roller 12 is acted on by biasing means 14 in this embodiment in the form of a leaf spring which act to encourage the roller 12 to move to the narrow end 16 of the chamber 10 and hence contact the blade 8 edge 18.

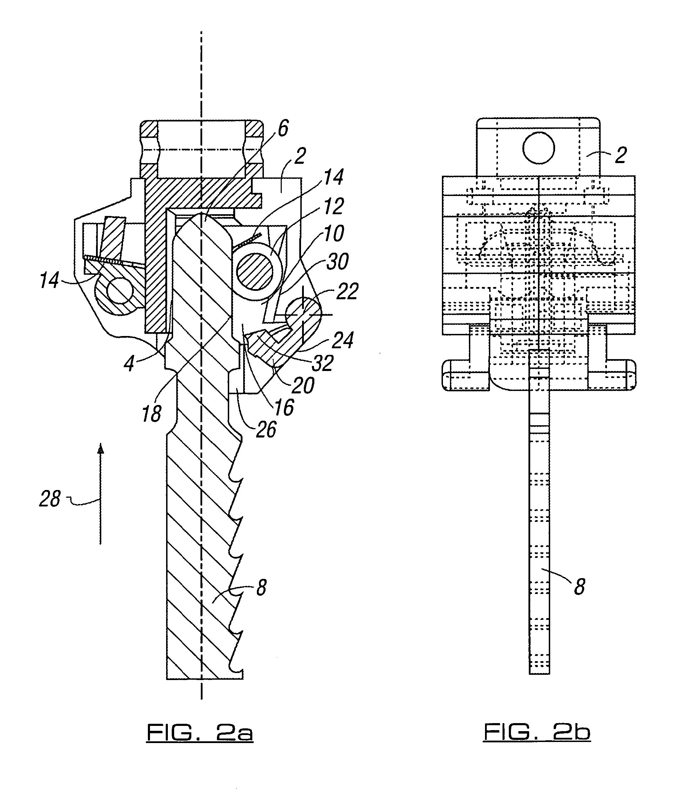

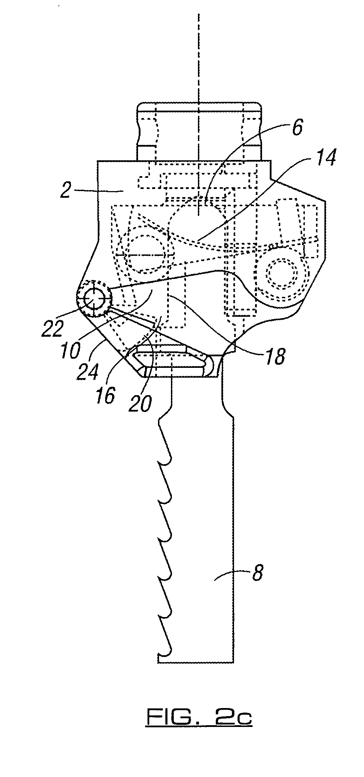

Also provided in the body 2 is a release means 20 which is movable between a retaining position as shown in Figure 1b and a release position as shown in Figure 2a, the same being movable by a user about the pivot axis 22, by applying force to the external face 24 of the release means.

Thus, in practice the body parts 2a, b are joined together and, as they do so the other components are inserted and retained in position. In order to insert the blade, the end of the same is moved into the channel opening 26 as indicated by arrow 28. The end of the blade contacts the roller 12 which will be sitting at the narrowest end of the chamber and the force of insertion causes the roller to rotate along the shaped section 30 of the chamber until the blade is inserted fully into the channel. At this stage the release of the force in direction 28 on the blade allows the biasing means to bias the roller towards the narrower part of the chamber and hence clamp the blade edge in position for use.

In order to release the blade the user applies an upward force to the release means and causes the contact 32 of the release means to contact the blade. Continued movement of the release means causes the roller to move up and overcomes the biasing means 14 and therefore releases the retention force from the roller on the blade 8 to allow the same to be removed.

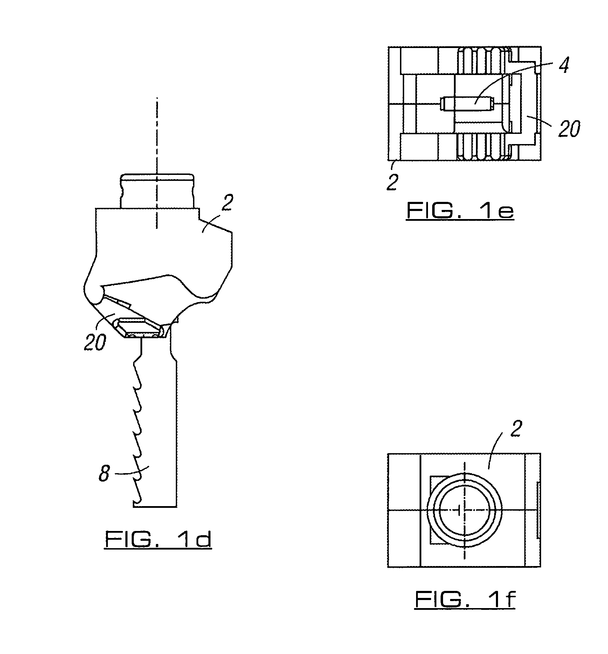

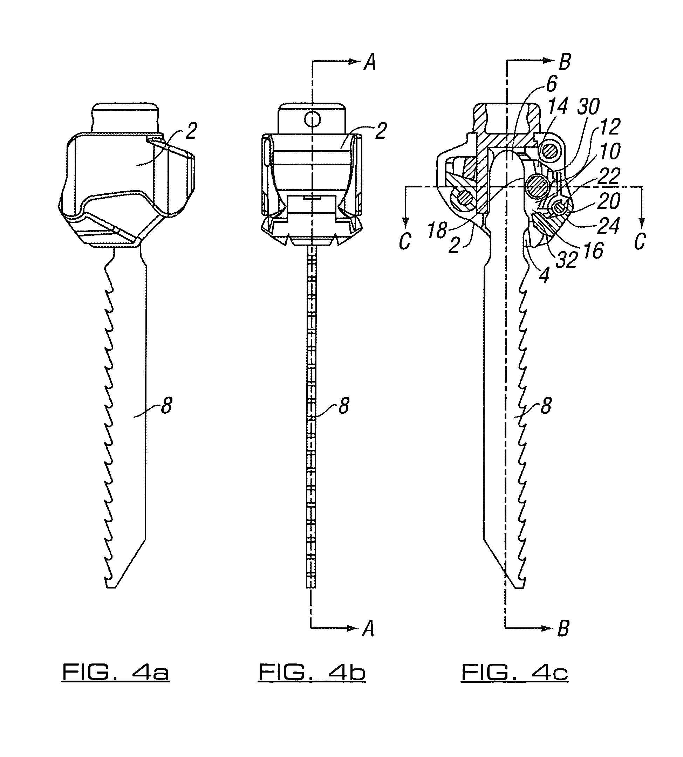

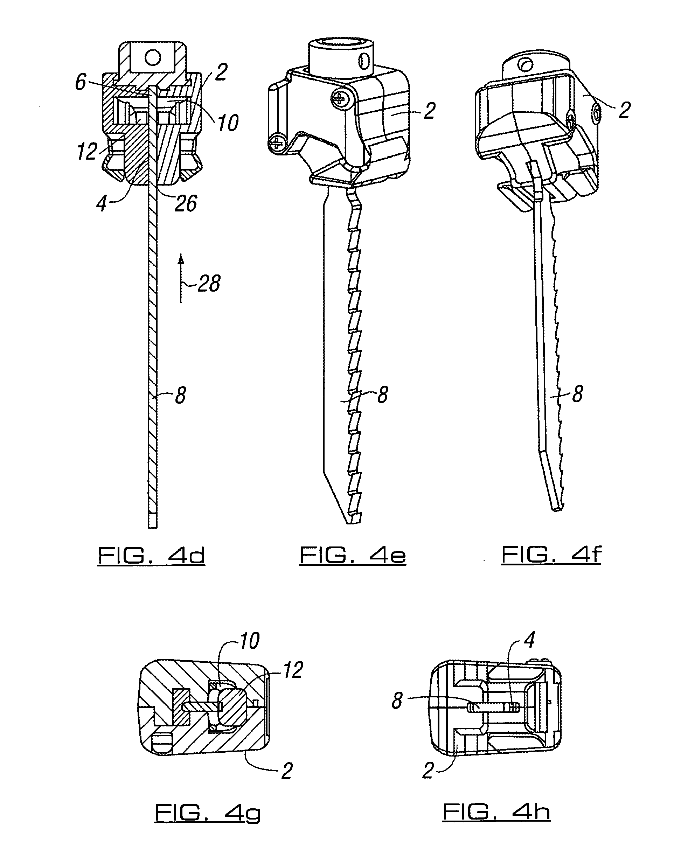

Figures 4a-h illustrate another embodiment of the invention utilising the same component parts and in respect of which the same reference numerals are used as in Figures 1-3.

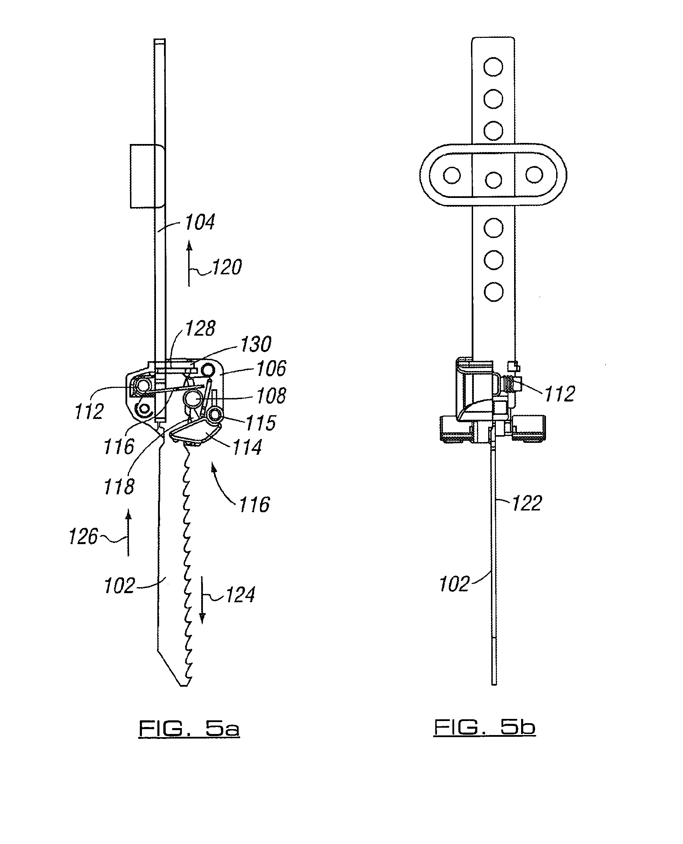

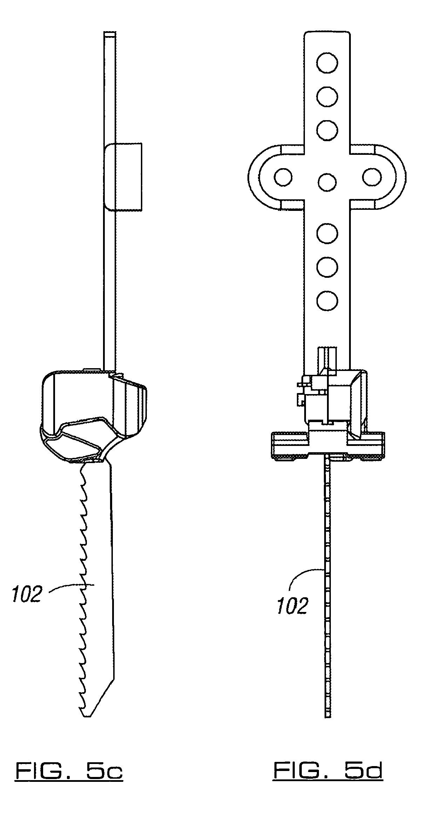

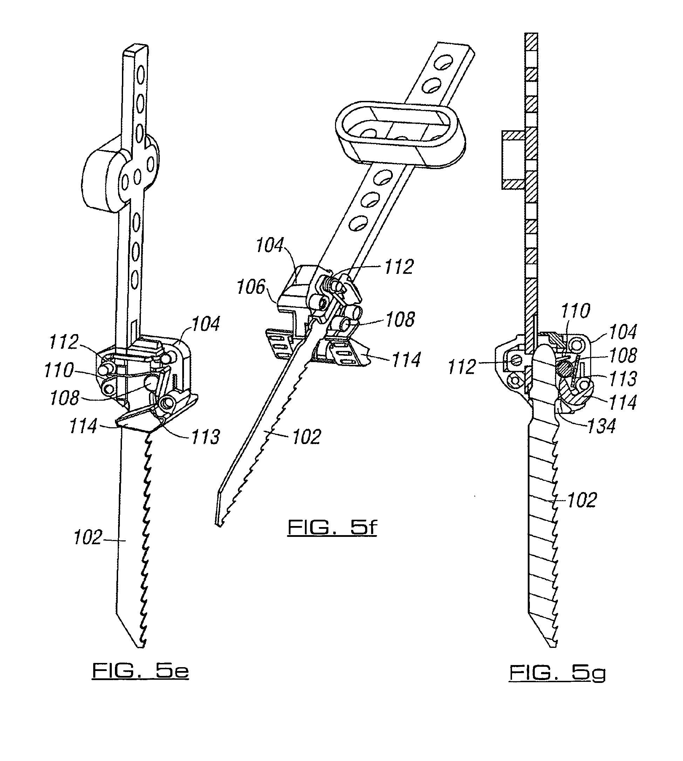

Referring now to Figures 5a-g, there is illustrated an alternative, and more practically implementable embodiment of the invention. In this case, the figures show a blade 102 which is retained in a body 104, of a blade holder 106 in accordance with the second embodiment of the invention. Half of the body 104 is removed for ease of illustration. In each Figure, the blade is shown in a located position and held there by a roller 108 which is shown in a clamping position and which is biased to that position, via the arms or legs 110 of a torsion spring 112 which is used rather than the leaf spring used in the previous embodiment. It is found that the use of a torsion spring increases the force applied to the roller to move the same to the retaining position in the chamber 113 as shown in the Figures 5a-g while at the same time, ensuring that the force of the arms 110 can still be overcome by the movement of the release means 114 from the at rest clamping position shown in Figures 5a-g, to a release position by movement of the same in the direction of arrow 116 about pivot point 115 such that the protrusion 118 also moves upwardly to contact with the roller 108 to move the roller up in the direction 120 into the wider part of the clamping chamber 43 and thereby release the clamping force on the edge 122 of the blade 102 and hence allow the blade to be withdrawn from the blade clamp in the direction 124.

Once the blade has been removed in the direction 124, a new blade can be inserted into the holder channel 134 and, as previously described, the insertion of the new blade need not require the user manipulation of the release member 114 as the insertion of the blade in direction 126 into the channel 134 causes the leading edge of the blade to contact the roller in the chamber 113 to move it against the force of the spring arm 110 to a sufficient extent to allow the end 128 of the blade to be inserted to the end stop 130 in the holder body whereupon the release of the upward force by the user, means that the roller will move to the clamping position at the narrower section of the chamber under the influence of the arms 110 of the torsion spring 112.

There is therefore provided a mechanism for the clamping of a saw blade in position which allows secure clamping of the blade in the blade holder and in turn the power tool whilst also ensuring that the same can be inserted in a relatively easy tool free manner with the blade being held by the user and inserted into the channel 134, with the release of the blade being achievable, without the need for tools to be used, via the user operation of the release means.

## Claims

1. A blade holder for a blade on a power tool, said blade selectively insertable into and releasable from the holder, said holder including a channel for location of the blade, a chamber positioned adjacent to the channel, a roller located in the chamber, biasing means to bias said roller biased towards location with the blade when positioned in the channel to retain the blade in position, and release means to contact the roller to move the same in the chamber when the release means is moved to a release position to allow the blade to be removed from the holder, wherein the roller is free to move within the chamber, said roller moved to a blade retaining position by the biasing means when the release means are in a normal position.

2. A blade holder according to claim 1 wherein the roller is movable to the release position by the insertion of the blade into the channel with the biasing means acting to cause the roller to subsequently contact and retain the blade once inserted into the said channel.

3. A blade holder according to claim 2 wherein the blade holder need only be directly operated by the user to release the blade from the holder.

4. A blade holder according to claim 1 wherein the release means overcomes a force of the biasing means when moved to a release position.

5. A blade holder according to claim 1 wherein the roller has a notch formed thereon, said notch formed around the periphery of the roller and positioned on the roller such that when the roller is in the chamber, and the blade is in the channel, the blade edge is located in the notch.

6. A blade holder according to claim 1 wherein the release means is movable between the release and normal retaining positions about a pivot axis.

7. A blade holder according to claim 1 wherein the release means is movable between release and normal retaining positions by a linear movement.

8. A blade holder according to claim 1 wherein a spring is provided to urge the release means to the normal, retaining positioning.

9. A blade holder according to claim 1 wherein the biasing means is a leaf spring.

10. A blade holder according to claim 1 wherein the biasing means is a torsion spring.

11. A blade holder according to claim 1 wherein the biasing means resistance to movement can be overcome by a movement force applied by the user either via the release means or via insertion of the blade into the channel.

12. A blade holder according to claim 1 wherein the blade has front and back opposing surfaces separated by shorter side walls defining the edges of the blade and wherein the roller contacts with one of said edges to retain the blade in the holder.

13. A blade holder according to claim 1 wherein one wall of the chamber is sloped with respect to the opposing chamber wall.

14. A blade holder according to the preceding claim wherein the wall which is sloped is that in the chamber which opposes the wall at which the blade edge is located and said slope and biasing means encourage the roller to move towards the narrow portion of the chamber to retain the blade in position and when the roller is moved to the wider part of the chamber the retaining force on the blade is released.

15. A power tool incorporating a blade and a blade holder as defined in claim 1.
